# EUROPEAN PATENT SPECIFICATION

(11) **EP 2 597 262 B1**
(45) Date of publication and mention of the grant of the patent: **06.08.2014**
(21) Application number: 12191000.4
(22) Date of filing: 01.11.2012
(51) Int. Cl.: F01D 5/18

(54) **Bucket assembly for turbine system**
Schaufelanordnung für ein Turbinensystem
Ensemble des aubes pour système de turbine

(30) Priority: 04.11.2011 US 201113289146
(43) Date of publication of application: 29.05.2013
(73) Proprietor: General Electric Company, Schenectady, NY 12345 (US)
(72) Inventor: Walunj, Jalindar Appa, 560066 Bangalore, Karnataka (IN); Honkomp, Mark Steven, Greenville, SC South Carolina 29615 (US); Amaral, Sergio Daniel Marques, Cambridge, MA Massachusetts 02141 (US)
(74) Representative: Cleary, Fidelma

(56) References cited:
- EP-A1- 2 037 081
- EP-A2- 2 228 518
- EP-A2- 2 365 187
- WO-A1-94/12770

## Description

### FIELD OF THE INVENTION

The subject matter disclosed herein relates generally to turbine systems, and more specifically to bucket assemblies for turbine systems.

### BACKGROUND OF THE INVENTION

Turbine systems are widely utilized in fields such as power generation. For example, a conventional gas turbine system includes a compressor, a combustor, and a turbine. During operation of the gas turbine system, various components in the system are subjected to high temperature flows, which can cause the components to fail. Since higher temperature flows generally result in increased performance, efficiency, and power output of the gas turbine system, the components that are subjected to high temperature flows must be cooled to allow the gas turbine system to operate at increased temperatures.

Various strategies are known in the art for cooling various gas turbine system components. For example, a cooling medium may be routed from the compressor and provided to various components. In the compressor and turbine sections of the system, the cooling medium may be utilized to cool various compressor and turbine components.

Buckets are one example of a hot gas path component that must be cooled. For example, various parts of the bucket, such as the airfoil, the platform, the shank, and the dovetail, are disposed in a hot gas path and exposed to relatively high temperatures, and thus require cooling. Various cooling passages and cooling circuits may be defined in the various parts of the bucket, and cooling medium may be flowed through the various cooling passages and cooling circuits to cool the bucket.

One specific component of a bucket that requires cooling is the platform. Thus, a platform cooling circuit is provided in many know buckets. A typical platform cooling circuit includes an inlet portion that extends from the platform to the shank of the bucket in a curvilinear fashion. Specifically, a curvilinear portion of the inlet portion is typically located near an exterior intersection between the platform and shank. Thus, during operation of the bucket, when the platform and shank are subjected to differing temperatures, this temperature differential may create significant bending stresses at the curvilinear portion of the inlet portion. These stresses can lead to a low thermal fatigue life, and thus require frequent repair or replacement of buckets.

EP 2228518 describes a turbine blade assembly, the turbine blade comprising a cavity and a blade platform supporting the turbine blade with the cavity extending into the blade platform. The blade platform comprises an upper surface adjacent the turbine blade and a lower surface comprising a first rib with the cavity extending into the first rib. The first rib is coupled to the lower surface of the platform and tapers as it extends away from the turbine blade. The first rib also comprises a first port extending from the cavity to the upper surface.

EP 2365187 describes a turbine component including a platform and an airfoil extending radially upward from the platform. A plurality of curved cooling passages are defined in the platform, each having at least one end disposed at an exterior surface of the platform and each configured to direct a cooling medium through the platform.

Accordingly, an improved bucket assembly for a turbine system is desired in the art. Specifically, a bucket assembly with an improved platform cooling circuit would be advantageous.

### BRIEF DESCRIPTION OF THE INVENTION

Aspects and advantages of the invention will be set forth in part in the following description, or may be obvious from the description, or may be learned through practice of the invention.

The present invention resides in a bucket assembly for a turbine system and in a turbine system as defined in the appended claims.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
FIG. 1 is a schematic illustration of a gas turbine system according to one embodiment of the present disclosure;
FIG. 2 is a perspective view of a bucket assembly according to one embodiment of the present disclosure;
FIG. 3 is a front view illustrating the internal components of a bucket assembly according to one embodiment of the present disclosure;
FIG. 4 is a partial perspective view illustrating the internal components of a bucket assembly according to one embodiment of the present disclosure; and
FIG. 5 is a perspective view of a platform cooling circuit and passage according to one embodiment of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

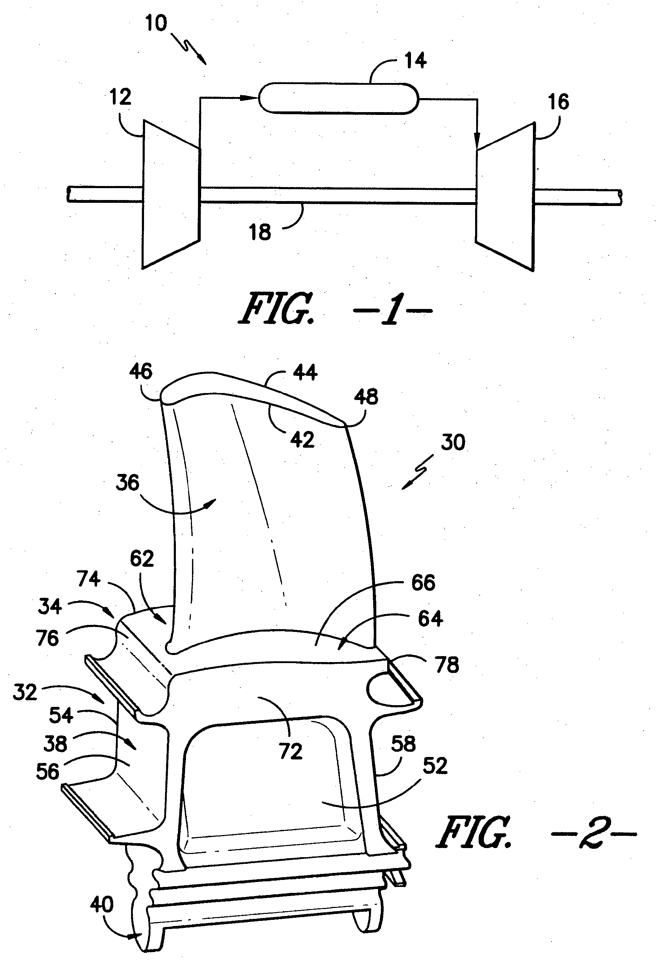

FIG. 1 is a schematic diagram of a gas turbine system 10. The system 10 may include a compressor 12, a combustor 14, and a turbine 16. The compressor 12 and turbine 16 may be coupled by a shaft 18. The shaft 18 may be a single shaft or a plurality of shaft segments coupled together to form shaft 18.

The turbine 16 may include a plurality of turbine stages. For example, in one embodiment, the turbine 16 may have three stages. A first stage of the turbine 16 may include a plurality of circumferentially spaced nozzles and buckets. The nozzles may be disposed and fixed circumferentially about the shaft 18. The buckets may be disposed circumferentially about the shaft and coupled to the shaft 18. A second stage of the turbine 16 may include a plurality of circumferentially spaced nozzles and buckets. The nozzles may be disposed and fixed circumferentially about the shaft 18. The buckets may be disposed circumferentially about the shaft 18 and coupled to the shaft 18. A third stage of the turbine 16 may include a plurality of circumferentially spaced nozzles and buckets. The nozzles may be disposed and fixed circumferentially about the shaft 18. The buckets may be disposed circumferentially about the shaft 18 and coupled to the shaft 18. The various stages of the turbine 16 may be at least partially disposed in the turbine 16 in, and may at least partially define, a hot gas path (not shown). It should be understood that the turbine 16 is not limited to three stages, but rather that any number of stages are within the scope and spirit of the present disclosure.

Similarly, the compressor 12 may include a plurality of compressor stages (not shown). Each of the compressor 12 stages may include a plurality of circumferentially spaced nozzles and buckets.

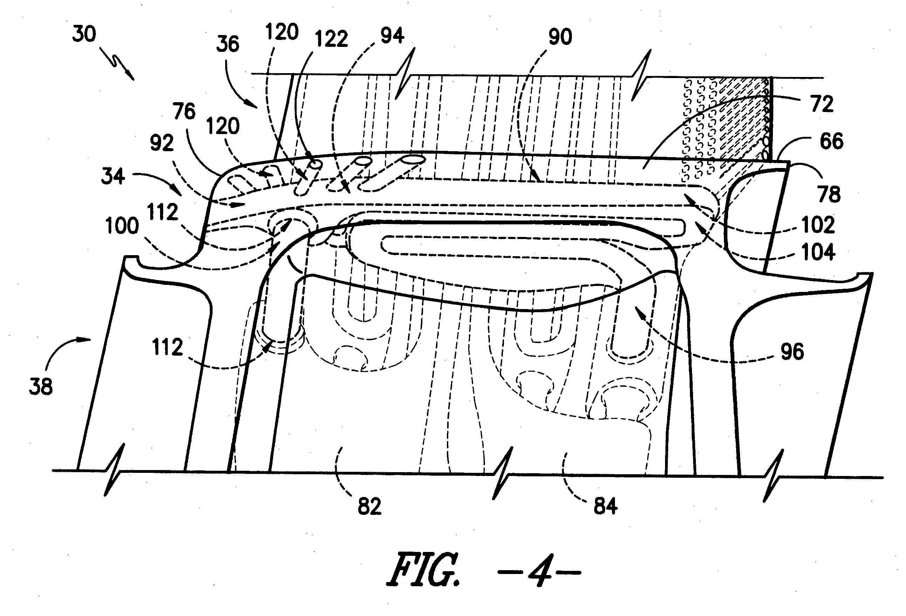

One or more of the buckets in the turbine 16 and/or the compressor 12 may comprise a bucket assembly 30, as shown in FIGS. 2 through 5. The bucket assembly 30 may include a main body 32 and a platform 34. The main body 32 typically includes an airfoil 36 and a shank 38. The airfoil 36 may be positioned radially outward from the shank 38. The shank 38 may include a root 40, which may attach to a rotor wheel (not shown) in the turbine system 10 to facilitate rotation of the bucket assembly 30.

In general, the main body 32 has an exterior surface. In embodiments wherein the main body 32 includes an airfoil 36 and shank 38, for example, the portion of the exterior surface defining the airfoil 36 may have a generally aerodynamic contour. For example, the airfoil 32 may have an exterior surface defining a pressure side 42 and suction side 44 each extending between a leading edge 46 and a trailing edge 48. Further, the portion of the exterior surface of the shank 38 may include a pressure side face 52, a suction side face 54, a leading edge face 56, and a trailing edge face 58.

The platform 34 may generally surround the main body 32, as shown. A typical platform may be positioned at an intersection or transition between the airfoil 36 and shank 38 of the main body 32, and extend outwardly in the generally axial and tangential directions. It should be understood, however, that a platform according to the present disclosure may have any suitable position relative to the main body 32 of the bucket assembly 30.

A platform 34 according to the present disclosure may include a forward portion 62 and an aft portion 64. The forward portion 62 is that portion of the platform 34 positioned proximate the leading edge 46 of the airfoil 36 and the leading edge face 56 of the shank 38, while the aft portion 64 is that portion of the platform 34 positioned proximate the trailing edge 48 of the airfoil 36 and the trailing edge 58 of the shank 36. The forward portion 62 and the aft portion 64 may further define a top face 66 of the platform 34, which may generally surround the airfoil 36 as shown. Further, a peripheral edge may surround the forward portion 62, aft portion 64, and top face 66. The peripheral edge may include a pressure side slash face 72 and suction side slash face 74, which each of the forward portion 62 and the aft portion 64 may extend between. The peripheral edge may further include a forward face 76, which may define a peripheral edge of the forward portion 62, and an aft face 78, which may define a peripheral edge of the aft portion 64.

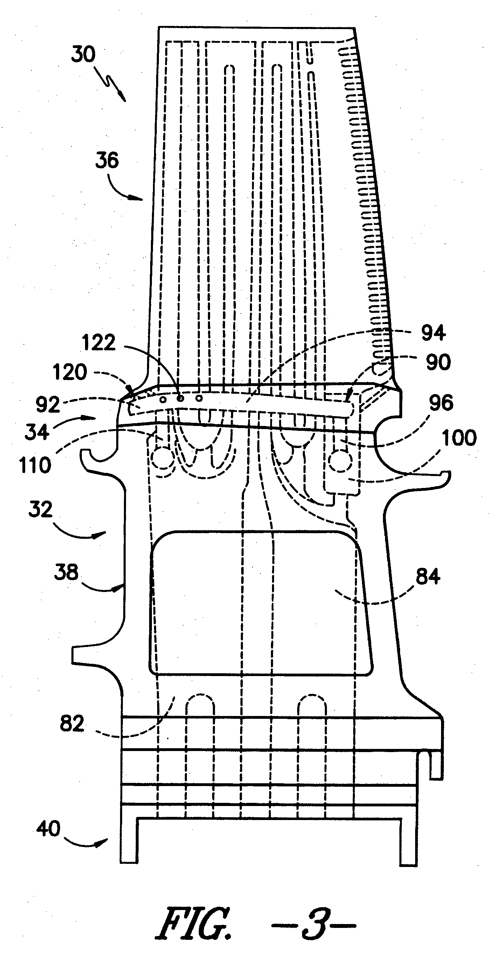

As shown in FIGS. 3 through 4, the main body 32 may define one or more main cooling circuits therein. The main cooling circuits may extend through portions of the main body 32 to cool the main body 32. For example, in some embodiments as shown, the main body 32 may define a forward main cooling circuit 82 and an aft main cooling circuit 84. The main cooling circuits may have any suitable shape and may extend along any suitable path. For example, as shown each main cooling circuit may have various branches and serpentine portions and may extend through the various portions of the main body 32, such as through the airfoil 36 and shank 38. A cooling medium may be flowed into and through the various main cooling circuits 82 to cool the main body 32.

As further shown in FIGS. 3 through 5, one or more platform cooling circuits 90 may be defined in the bucket assembly 30. In general, the platform cooling circuit 90 may be defined at least partially in the platform 34. For example, in exemplary embodiments, a portion of the platform cooling circuit 90 is defined in the platform 34, and extends through the platform 34 to cool it. Other portions of the platform cooling circuit 90 may extend into the main body 32 to inlet cooling medium into the platform cooling circuit 90 (not shown) or exhaust the cooling medium therefrom. In one embodiment, as shown in FIG. 3, a platform cooling circuit 90 may include a forward portion 92 as discussed below, an intermediate portion 94, and/or an outlet portion 96. The outlet portion 96 may extend from the platform 34 into the main body 32, and the forward portion 92 and intermediate portion 94 may extend through the platform 34. Cooling medium may flow through the forward portion 92 and intermediate portion 94, and be exhausted through the outlet portion 96.

In many bucket assemblies 30, a platform cooling circuit 90 is in fluid communication with a main cooling circuit, such that cooling medium is flowed from a main cooling circuit into the platform cooling circuit 90 and/or is flowed from a platform cooling circuit 90 to a main cooling circuit. For example, in the embodiment shown in FIGS. 3 through 5, the outlet portion 96 is in fluid communication with the aft main cooling circuit 84.

A platform cooling circuit 90, or any portion thereof, may have any suitable path through the platform 34. For example, the platform cooling circuit 90 or any portion thereof may be generally linear or generally curvilinear. In some exemplary embodiments, the platform cooling circuit 90, such as the intermediate portion 94 thereof, may have a generally serpentine path, as shown. Such serpentine path may include alternating generally linear and generally curvilinear portions, such that cooling medium may flow back and forth through such portions as it flows through the platform cooling circuit 90. It should be understood, however, that a platform cooling circuit 90 according to the present disclosure may have any suitable path through the platform 34.

A platform cooling circuit 90 according to the present disclosure may further include an upper surface 102 and a lower surface 104. In some embodiments, such as wherein the platform cooling circuit 90, or any portion thereof, has a oval or circular cross-section, the upper surface 102 and lower surface 104 may be generally curvilinear, and may meet to fully define the platform cooling circuit 90. In other embodiments, a platform cooling circuit 90 may further include one or more sidewalls (not shown). Each sidewall may extend between an upper surface 102 and a lower surface 104. Upper surfaces 102 and lower surfaces 104 according to the present disclosure may have any suitable shape and size. For example, an upper surface 102 and/or lower surface may be planer, may be curvilinear as discussed, or may include suitable bends or other disruptions. An upper surface 102 and lower surface 104, along with optional sidewalls, may define any suitable cross-sectional profile for a platform cooling circuit, such as rectangular, oval, triangular, or any other suitable polygonal shape.

A bucket assembly 30 according to the present disclosure may further advantageously include one or more passages 110, as shown in FIGS. 3 through 5. Each passage 100 extends between a main cooling circuit and a platform cooling circuit 90. In exemplary embodiments, for example, a passage 110 may extend between a forward main cooling circuit 62 and a platform cooling circuit 90. Alternatively, however, a passage 110 may extend between an aft main cooling circuit 64 and a platform cooling circuit 90. Each passage 110 may provide fluid communication between such main cooling circuit and such platform cooling circuit 90. Thus, in exemplary embodiments, cooling medium may flow from the main cooling circuit into the passage 110, and from the passage 110 to the platform cooling circuit 90. Alternatively, however, cooling medium may flow from the platform cooling circuit 90 into the passage 110, and from the passage 110 into the main cooling circuit.

As shown, a passage 110 according to the present disclosure further includes end openings 112. The end openings 112 act as the inlet and outlet for the passage 110 for flow to and from the main cooling circuit and platform cooling circuit 90. Advantageously, an end opening 112 of the passage 110, such as the end opening 112 for flowing cooling medium between the passage 110 and platform cooling circuit 90, is defined in the lower surface 104 of the platform cooling circuit 90. In exemplary embodiments as shown, such end opening 112 is an outlet, such that cooling medium flows through the end opening 112 into the platform cooling circuit 90 from the passage 110. Such design of the passage 110 and platform cooling circuit 90 may advantageously reduce stresses at the intersection between the platform cooling circuit 90 and passage 110. For example, by designing the passage 110 and platform cooling circuit 90 such that an end opening 112 of the passage 110 is defined in the lower surface 104 of the platform cooling circuit 90, the intersection between the passage 110 and platform cooling circuit 90 may be spaced from the exterior intersection between the platform 34 and shank 38. Thus, during operation of the turbine system 10 when the platform 34 and shank 38 are subjected to different temperatures, resulting bending stresses at the intersection of the passage 110 and platform cooling circuit 90 may be reduced or eliminated.

In some embodiments, as shown, at least a portion of a passage 110 may extend in a generally radial direction. The radial direction is the direction between the root 40 and airfoil 36 of the bucket assembly, and may be shown as a vertical direction in FIG. 3. Thus, as shown, at least a portion of a passage 110 may extend in the generally radial direction. As shown, in exemplary embodiments, such portion may be the portion that defines an end opening 112, such as the end opening 112 that is defined in the lower surface 104 of the platform cooling circuit 90. In embodiments wherein such portion extends in the radial direction, cooling medium flowing from the passage 110 into the platform cooling circuit 90 may further advantageously impingement cool the upper surface 102 of the platform cooling circuit 90, thus providing improved cooling to the platform 34.

As discussed above and shown in FIGS. 3 through 5, in some embodiments the platform cooling circuit 90 may include a forward portion 92 and an intermediate portion 94. Further, the end opening 112 of the passage 110 that is defined in the lower surface 104 of the platform cooling circuit 90 may be defined in the intermediate portion 94. The forward portion 92 may thus be that portion of the platform cooling circuit 90 that is generally upstream of such end opening 112, such that the general flow path of cooling medium from the passage 110 into and through the platform cooling circuit 90 is away from the forward portion 92.

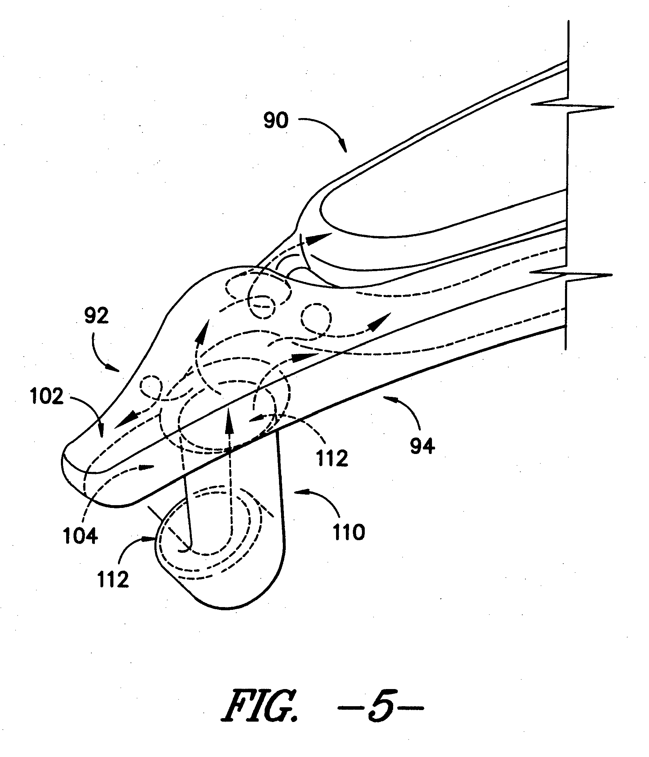

The arrows shown in FIG. 5 illustrate one embodiment of a general flow path of cooling medium from the passage 110 into and through the platform cooling circuit 90. As shown, a portion of the cooling medium may, upon entering the platform cooling circuit 90, flow upstream into the forward portion 92. This cooling medium may then continue downstream, along the general flow path of the cooling medium through the intermediate portion 94 of the platform cooling circuit 90. In some embodiments as discussed above, the cooling medium 90 may further flow through an outlet portion 96 and be exhausted from the platform cooling circuit 90.

In some embodiments as shown, a bucket assembly 30 according to the present disclosure may further include one or more exhaust passages 120. Each exhaust passage 120 may be defined in the platform 34, such as in the aft portion 64 of the platform 34 and/or in the forward portion 62 of the platform 34, and may be in fluid communication with the platform cooling circuit 90. For example, an exhaust passage 120 may be in fluid communication with a forward portion 92, intermediate portion 94, outlet portion 96, and/or any other suitable portion of a platform cooling circuit 90. Thus, cooling medium flowing through the platform cooling circuit 90 may flow from the platform cooling circuit 90 into an exhaust passage 120.

Each exhaust passage 120 may further include an outlet 122. The outlet 122 may be defined in any suitable location on the platform 34, such as on the aft portion 64 and/or forward portion 62 of the platform 34. For example, an outlet 122 may be defined in the top face 66 as shown, or in the suction side slash face 74, or in the pressure side slash face 72 as shown, or in the forward face 76, aft face 78, or any other suitable location on the platform 34, such as on the aft portion 64 and/or forward portion 62 of the platform 34. Cooling medium flowed through an exhaust passage 120 may thus be exhausted through the outlet 122 of that exhaust passage 120. Additionally, in some embodiments, such exhausted cooling medium may further advantageously act as a cooling film to cool the exterior of the platform 34.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A bucket assembly (30) for a turbine system (10), comprising:
a main body (32) having an exterior surface and defining a main cooling circuit (82);
a platform (34) surrounding the main body (32) and at least partially defining a platform cooling circuit (90), at least a portion of which extends along a path through the platform (34), the platform (34) comprising a forward portion (62) and an aft portion (64) each extending between a pressure side slash face (72) and a suction side slash face (74) and further comprising a forward face (76), an aft face (78), and a top face (66), the platform cooling circuit (90) including a forward portion (92) and an intermediate portion (94) and having an upper surface (102) and a lower surface (104); and **characterized in** having
a passage (110) extending between and providing fluid communication between the main cooling circuit (82) and the platform cooling circuit (90), wherein an end opening (112) of the passage (110) is defined in the lower surface (104) of the intermediate portion (94) of the platform cooling circuit (90)

2. The bucket assembly of claim 1, wherein the main cooling circuit (82) is a forward main cooling circuit.

3. The bucket assembly of claim 1 or 2, wherein the end opening (112) is an outlet.

4. The bucket assembly of any of claims 1 to 3, wherein at least a portion of the passage (110) extends in a generally radial direction.

5. The bucket assembly of claim 4, wherein the portion of the passage (110) extending in the radial direction defines the end opening (112).

6. The bucket assembly of any preceding claim, wherein the platform cooling circuit (90) further comprises an outlet portion (96).

7. The bucket assembly of any preceding claim, wherein the intermediate portion (94) of the platform cooling circuit (90) has a generally serpentine path.

8. The bucket assembly of any preceding claim, further comprising an exhaust passage (120) defined in the platform (34) and in fluid communication with the passage (110).

9. The bucket assembly of claim 8, wherein an outlet (122) of the exhaust passage (120) is defined in the top face (66) of the platform (34).

10. The bucket assembly of claim 8, wherein an outlet (122) of the exhaust passage (120) is defined in the pressure side slash face (72) of the platform (34).

11. The bucket assembly of any preceding claim, wherein the main body (32) comprises a shank (38) and an airfoil (36).

12. A turbine system (10), comprising:
a compressor (12);
a turbine (16) coupled to the compressor (12); and
a plurality of bucket assemblies (30) disposed in at least one of the compressor (12) or the turbine (16), at least one of the bucket assemblies (30) as recited in any of claims 1 to 11.

## Patentansprüche

1. Schaufelanordnung (30) für ein Turbinensystem (10), aufweisend:
einen Hauptkörper (32), der eine Außenfläche aufweist und einen Hauptkühlkreis (82) definiert;
eine den Hauptkörper (32) umgebende Plattform (34), von der sich wenigstens ein Teil entlang einem Pfad durch die Plattform (34) erstreckt, wobei die Plattform (34) einen vorderen Teil (62) und einen hinteren Teil (64) aufweist, die sich jeweils zwischen einer druckseitigen Schrägfläche (72) und einer saugseitigen Schrägfläche (74) erstrecken, und ferner aufweisend eine vordere Stirnfläche (76) und eine hintere Stirnfläche (78) und eine obere Stirnfläche (66), wobei der Plattform-Kühlkreis (90) einen vorderen Teil (92) und einen Zwischenteil (94) aufweist und eine obere Fläche (102) und eine untere Fläche (104) hat; und **dadurch gekennzeichnet, dass** sie Folgendes aufweist:
einen Durchgang (110), der sich zwischen dem Hauptkühlkreis (82) und dem Plattformkühlkreis (90) erstreckt und zwischen diesen eine Fluidverbindung bereitstellt, wobei eine Endöffnung (112) des Durchgangs (110) in der unteren Fläche (104) des Zwischenteils (94) des Plattformkühlkreises (90) definiert wird.

2. Schaufelanordnung nach Anspruch 1, wobei der Hauptkühlkreis (82) ein vorderer Hauptkühlkreis ist.

3. Schaufelanordnung nach Anspruch 1 oder 2, wobei die Öffnung (112) ein Auslass ist.

4. Schaufelanordnung nach einem der Ansprüche 1 bis 3, wobei wenigstens ein Teil des Durchgangs (110) sich in einer allgemein radialen Richtung erstreckt.

5. Schaufelanordnung nach Anspruch 4, wobei der Teil des Durchgangs (110), der sich in radialer Richtung erstreckt, die Endöffnung (112) definiert.

6. Schaufelanordnung nach einem der vorhergehenden Ansprüche, wobei der Plattformkühlkreis (90) fern einen Auslassteil (96) aufweist.

7. Schaufelanordnung nach einem der vorhergehenden Ansprüche, wobei der Zwischenteil (94) des Plattformkühlkreises (90) einen allgemein serpentinenartigen Pfad aufweist.

8. Schaufelanordnung nach einem der vorhergehenden Ansprüche, ferner aufweisend einen Ausströmdurchgang (120), der in der Plattform (34) definiert ist und ein Fluidverbindung mit dem Durchgang (110) steht.

9. Schaufelanordnung nach Anspruch 8, wobei ein Auslass (122) des Ausströmdurchgangs (120) in der oberen Fläche (66) der Plattform (34) definiert ist.

10. Schaufelanordnung nach Anspruch 8, wobei ein Auslass (122) des Ausströmdurchgangs (120) in der druckseitigen Schrägfläche (72) der Plattform (34) definiert ist.

11. Schaufelanordnung nach einem der vorhergehenden Ansprüche, wobei der Hauptkörper (32) einen Schenkel (38) und einen Flügel (36) aufweist.

12. Turbinensystem (10), aufweisend:
einen Verdichter (12);
eine Turbine (16), die an den Verdichter (12) gekoppelt ist; und
mehrere Schaufelanordnungen (30), die in wenigstens einem von Verdichter (12) oder Turbine (16) angeordnet sind, wobei wenigstens eine der Schaufelanordnungen (30) einem der Ansprüche 1 bis 11 entspricht.

## Revendications

1. Une assemblage d'aube (30) pour un système de turbine (10), comprenant :
un corps principal (32) ayant une surface extérieure et définissant un circuit de refroidissement principal (82) ;
une plateforme (34) entourant le corps principal (32) et au moins partiellement définissant un circuit de refroidissement de plateforme (90), dont au moins une partie s'étend le long d'une voie à travers la plateforme (34), la plateforme (34) comprenant une partie avant (62) et une partie arrière (64) chacune s'étendant entre une face inclinée côté pression (72) et une face inclinée côté aspiration (74) et comprenant en outre une face avant (76), une face arrière (78), et une face de dessus (66), le circuit de refroidissement de plateforme (90) incluant une partie avant (92) et une partie intermédiaire (94) et ayant une surface supérieure (102) et une surface inférieure (104) ; et caractérisé en ayant
un passage (110) s'étendant entre et fournissant une communication fluidique entre le circuit de refroidissement principal (82) et le circuit de refroidissement de plateforme (90), dans lequel une ouverture d'extrémité (112) du passage (110) est définie dans la surface inférieure (104) de la partie intermédiaire (94) du circuit de refroidissement de plateforme (90).

2. L'assemblage d'aube de la revendication 1, dans lequel le circuit de refroidissement principal (82) est un circuit de refroidissement principal avant.

3. L'assemblage d'aube de la revendication 1 ou 2, dans lequel l'ouverture d'extrémité (112) est une sortie.

4. L'assemblage d'aube selon l'une quelconque des revendications 1 à 3, dans lequel au moins une partie du passage (110) s'étend dans une direction globalement radiale.

5. L'assemblage d'aube de le revendication 4, dans lequel la partie de passage (110) s'étend dans la direction radiale définie par l'ouverture d'extrémité (112).

6. L'assemblage d'aube selon une quelconque revendication précédente, dans lequel le circuit de refroidissement de plateforme (90) comprend en outre une partie de sortie (96).

7. L'assemblage d'aube selon une quelconque revendication précédente, dans lequel la partie intermédiaire (94) du circuit de refroidissement de plateforme (90) a une voie globalement sinueuse.

8. L'assemblage d'aube selon une quelconque revendication précédente, comprenant en outre un passage d'échappement (120) défini dans la plateforme (34) et en communication fluidique avec le passage (110).

9. L'assemblage d'aube de la revendication 8, dans lequel une sortie (122) du passage d'échappement (120) est définie dans la face de dessus (66) de la plateforme (34).

10. L'assemblage d'aube de la revendication 8, dans lequel une sortie (122) du passage d'échappement (120) est définie dans la face inclinée côté pression (72) de la plateforme (34).

11. L'assemblage d'aube selon une quelconque revendication précédente, dans lequel le corps principal (32) comprend un élément central (38) et un profilé (36).

12. Un système de turbine (10), comprenant :
un compresseur (12) ;
une turbine (16) couplée au compresseur (12) ; et
une pluralité d'assemblage d'aube (30) disposés dans au moins une du compresseur (12) ou de la turbine (16), au moins un des ensembles réservoir (30) tel que récité dans une quelconque des revendications 1 à 11.
